# EUROPEAN PATENT SPECIFICATION

(11) **EP 1 987 295 B1**
(45) Date of publication and mention of the grant of the patent: **03.07.2013**
(21) Application number: 06823952.4
(22) Date of filing: 06.12.2006
(51) Int. Cl.: F24F 11/00

(54) **AIR CONDITIONING SYSTEM AND CONTROL METHOD THEREOF**
KLIMAANLAGE UND STEUERVERFAHREN DAFÜR
SYSTÈME DE CLIMATISATION ET SON PROCÉDÉ DE RÉGULATION

(30) Priority: 20.02.2006 KR 20060016300
(43) Date of publication of application: 05.11.2008
(73) Proprietor: LG Electronics Inc., Youngdungpo-ku Seoul 105-875 (KR)
(72) Inventor: KIM, Young-Kyoung, Jinjoo-si, Kyungsangnam-do 660-989 (KR)
(74) Representative: Palmer, Jonathan R.
(86) International application number: PCT/KR2006/005245
(87) International publication number: WO 2007/097513

(56) References cited:
- EP-A1- 1 610 069
- EP-A2- 0 801 274
- DE-A1- 4 142 365
- FR-A1- 2 860 284
- JP-A- 58 153 034
- US-A- 4 448 035
- US-A- 4 448 035
- US-A- 5 364 026
- US-A- 5 931 009
- US-A1- 2001 018 964
- US-A1- 2002 139 514
- US-A1- 2006 021 359

## Description

### Technical Field

The present invention relates to an air conditioning system and a control method of the air conditioning system, and more particularly to an air conditioning system and a control method of the air conditioning system which controls the operation of an air purifying unit operated in connection with an air conditioner according to the defrosting operation of the air conditioner.

### Background Art

Generally, in the case in which lives breathe for more than a predetermined period of time in a space closed from exterior air, the amount of carbon dioxide increases, thereby obstructign breathing of the lives. Therefore, in a space such as an office in which many people exist and a narrow space such as a vehicle, it is necessary to ventilate the interior air on demand. Further, in the case in which an air conditioner performs the cooling and heating operation, the interior air should be ventilated. Then, a ventilation system is generally used.

More particularly, the ventilation system is installed on the bottom of a room and is fixed or mounted onto a ceiling to introduce the exterior into the room and to discharge the interior air to the outside. Therefore, installation of a ventilation is required in a space in which circulation of the interior air is not smoothly performed or a space in which many people exist.

However, a conventional ventilation system is individually operated from an air conditioner to perform a ventilating function for purifying the interior air and a ventilating function. In other words, in the case in which the purifying and ventilating functions are performed in the winter season in which the temperature difference between the exterior air and the interior air is large and in the case in which the purifying and ventilating functions are performed during the defrosting operation of the air conditioner, the interior temperature lowers, thereby remarkably decreasing the heating efficiency.

Document US 2002/139514 shows a control method of an air conditioning system,
wherein the air conditioning system comprises an air conditioner generating defrosting operation information and an air purifying unit operated in connection with the air conditioner and wherein the air purifying unit includes an air ventilating and cleaning unit ventilating and purifying interior air,
the method comprising the steps of:
operating the air conditioner and the air purifying unit in connection with each other;
determining whether the air conditioner performs a defrosting operation; and controlling the operation of the air cleaning unit according to the determination result.

### Disclosure of Invention

### Technical Problem

Accordingly, the present invention has been developed in order to solve the above-mentioned problems occurring in the prior art, and an object of the present invention is to provide an air conditioning system which controls the operation of an air purifying unit operated in connection with an air conditioner according to the defrosting operation of the air conditioner.

Another object of the present invention is to provide an air conditioning system and a control method of the air conditioning system which improves the heating efficiency by controlling the operation of an air purifying unit according to the defrosting operation of the air conditioner.

Another object of the present invention is to provide an air conditioning system and a control method of the air conditioning system which improves the comfortableness of the interior of a room by controlling the operation of an air purifying unit according to the interior temperature and the exterior temperature.

### Technical Solution

In order to accomplish these objects, there is provided a control method of an air conditioning system as set out in claim 1.

### Advantageous Effects

According to the control method of the air conditioning system according to the present invention, since an air conditioner and an air purifying unit used for ventilation and purification of the interior air are controlled so as to be operated in connection with each other so that the ventilating and purifying functions of the air purifying unit is controlled so as to maintain the interior temperature when the air conditioner performs the defrosting operation, the comfortableness in the interior of a room and the heating efficiency are improved.

Further, since the operation of the air purifying unit is controlled according to the interior temperature and the exterior temperature, the comfortableness in the interior of a room and the reliability and value of the product are improved.

### Brief Description of the Drawings

The above and other objects, features, and advantages of the present invention will be more apparent from the following detailed description taken in conjunction with the accompanying drawings, in which:
FIG. 1 is a view showing an air conditioner constituting an air conditioning system according to the present invention;

FIG. 2 is a perspective view showing an air purifying unit constituting an air conditioning system according to the present invention;

FIG .3 is a block diagram showing an air conditioning system according to the present invention; and

FIG. 4 is a flow chart showing a control method of an air conditioning system according to the present invention.

### Best Mode for Carrying Out the Invention

Hereinafter, preferred embodiments of the present invention will be described in detail with reference to the accompanying drawings.

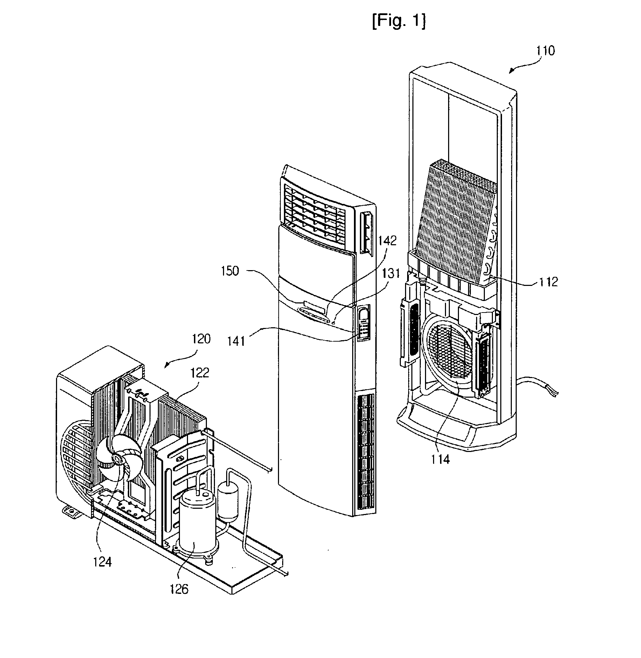

FIG. 1 is a view showing an air conditioner constituting an air conditioning system according to the present invention.

Referring to FIG. 1, the air conditioner according to the present invention includes an indoor unit 100 including an indoor heat exchanger 112 heat-exchanging a refrigerant with interior air, an indoor blowing fan 114 flowing the heat-exchanged interior air, etc. and an outdoor unit 120 including a heat exchanger 122 heat-exchanging the refrigerant with exterior air, an outdoor blowing fan 124 blowing the heat-exchanged exterior air, and a compressor 126 compressing the refrigerant.

Further, the indoor unit 110 further includes a manipulation section 142 for inputting the operation condition of the air conditioner, a display section 150 displaying the operation state of the air conditioner, and a remote controller 141 for controlling the operation of the air conditioner at a remote place.

Here, a temperature sensor 131 detecting the temperature of the interior air is installed in the indoor unit 110 and the temperature of the exterior air is predicted by the operation rate of the compressor 126.

On the other hand, the outdoor heat exchanger 122 is operated as an evaporator when the air conditioner performs its heating operation. If the heating operation is performed for a predetermined period of time, frost is formed in the outdoor heat exchanger and the air conditioner performs its defrosting operation to prevent the formation of the frost.

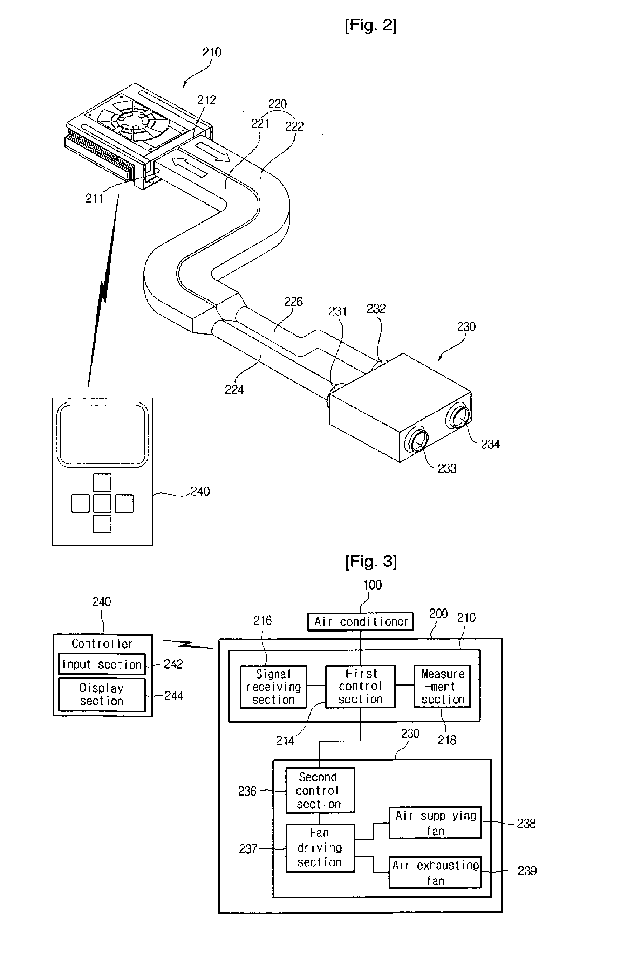

FIG. 2 is a perspective view showing an air purifying unit constituting the air conditioning system according to the present invention.

Referring to FIG. 2, the air purifying unit 200 according to the present invention includes an air ventilating and cleaning unit 210, a total heat exchanger 230 connected to the air ventilating and cleaning unit 210 by means of a duct member 220, and a controller 240 connected to the air ventilating and cleaning unit 210 by wire or wirelessly, for selecting a ventilation mode or a cleaning mode.

More particularly, the duct member 220 includes an air supply duct 221 for introducing exterior air and an air discharge duct 222 for discharging interior air. Ends of the air supply duct 221 and the air discharge duct 222 are connected to an air suction opening 211 and an air discharge opening 212, and the other ends thereof are connected to the total heat exchanger 230.

Then, an air supply connection pipe 224 and an air discharge connection pipe 226 are interposed between the duct member 220 and the total heat exchanger 230 to firmly engage the total heat exchanger 230 and the duct member 220.

On the other hand, the total heat exchanger 230 heat-exchanges the exterior air introduced into the interior of a room with the interior air discharged to the exterior of the room so that the temperature of the interior of the room cannot rapidly decrease or increase by the exterior air introduced into the interior of the room.

Namely, in the case in which the temperature of the interior of the room is higher than that of the exterior of the room, heat is transferred from the air discharged to the exterior of the room to the air introduced into the interior of the room, thereby decreasing the difference between the interior temperature and the temperature of the air introduced into the interior of the room and preventing a rapid change of the interior temperature.

More particularly, the total heat exchanger 230 includes an exhausted air suction opening 232 formed on one side of the outer peripheral surface thereof, a supplied air discharge opening 231 separated from the discharged air suction opening 232 by a predetermined distance, an exhausted air discharge opening 234 formed at a position opposite to the exhausted air suction opening 232, a supplied air suction opening 233 formed at a position opposite to the supplied air discharge opening 232, and a total exchanging device (not shown).

Further, the total heat exchanger 230 further includes an exhausted air fan (not shown) mounted to the interior of a pipe connecting the exhausted air suction opening 232 and the exhausted air discharge opening 234 and an supplied air fan (not shown) mounted to the interior of a pipe connecting the supplied air suction opening 233 and the supplied air discharge opening 231.

More particularly, the total heat exchanging device is installed in the interior of the total heat exchanger 230 and heat-exchanges the exterior air and the interior air which are introduced into the total heat exchanger 230 without mixing the exterior air and the interior air.

Further, the exhausted air suction opening 232 is formed in the same side surface as the supplied air discharge opening 231 and the exhausted air discharge opening 234 is formed in the same side surface as the supplied air suction opening. Here, the positions of the exhausted air suction opening 232 and the supplied air discharge opening 231 and the positions of the exhausted air discharge opening 234 and the supplied air suction opening 233 can be varied according to the kind of the total heat exchanger 230.

The exhausted air suction opening 232 is connected to an exhausted air connecting pipe 212 to flow the interior air discharged from the air ventilating and cleaning unit 210. Further, the supplied air discharge opening 231 is connected to the supplied air connecting pipe 211 to supply the exterior air to the air ventilating and cleaning unit 210.

On the other hand, a user can control the air ventilating and cleaning unit 210 and/or the total heat exchanger 230 so that they can be operated individually or in connection with each other through an operation button provided in the controller.

In other words, if a user selects the ventilation mode, the air ventilating and cleaning unit 210 is driven together with the total heat exchanger 230 to circulate the interior air and the exterior air. On the other hand, if the cleaning mode is selected, only the air ventilating and cleaning unit 219 is operated to that the interior air can be purified in the interior of the air ventilating and cleaning unit 210 and be discharged into the interior of the room again.

FIG. 3 is a block diagram showing the constitution of the air conditioning system according to the present invention.

Referring to FIG. 3, the air conditioning system according to the present invention includes an air conditioner 100 generating defrosting operation information, an air purifying unit 200 controlling functions for ventilating and purifying interior air on the basis of the defrosting operation information, and a controller 240 transmitting instruction for operation mode selection to the air purifying unit 200.

More particularly, the controller 240 is connected to the air purifying unit 200 by wire or wirelessly and transmits a manipulation instruction signal to the air purifying unit 200.

Further, the controller 240 includes an input section 242 for inputting operation and stop instructions of the air purifying unit 200 and an instruction on the operation mode and a display section 244 displaying the operation state of the air purifying unit 200.

On the other hand, as mentioned above, the air purifying unit 200 includes an air ventilating and cleaning unit 210 and a total heat exchanger 230.

More particularly, the air ventilating and cleaning unit 210 includes a signal receiving section 216 receiving various signals transmitted form the controller 240 and the air conditioner 100, a measurement section 218 for measuring the interior temperature and the exterior temperature, and a first control section 214 to which an instruction received by the signal receiving section 216 is transmitted.

The signal receiving section 216 receives defrosting operation information and transfers the information to the first control section 214 in the case in which the defrosting operation of the air conditioner 100 si performed.

The measurement section 218 measures the interior temperature and the exterior temperature repetitively for a predetermined period of time and transfers the measured temperatures to the first control section 214.

The first control section 214 applies control instruction to the total heat exchanger 230 on the basis of the defrosting operation information received by the signal receiving section 216.

Here, the first control section transfers the control instruction to the total heat exchanger 230 according to the interior temperature and the exterior temperature which are measured by the measurement section 218.

Namely, the first control section 214 compares the difference value between the measured interior and exterior temperatures with a set temperature value and generates a control instruction corresponding to the comparison.

On the other hand, the total heat exchanger 230 includes a second control section 236 receiving the instruction from the first control section 214 and a fan driving section 237 for regulating the wind amount of a fan under the control of the second control section 236.

More particularly, the second control section 236 receives the control signal from the first control section 214 to control the fan driving section 237.

The fan driving section 237 drives an air supplying fan 238 and an air exhausting fan 239 which are mounted to the interior of the total heat exchanger 230.

Therefore, the fan driving section 237 controls the drive of the air supplying fan 238 and the air exhausting fan 239 according to the control signal of the second control section 236.

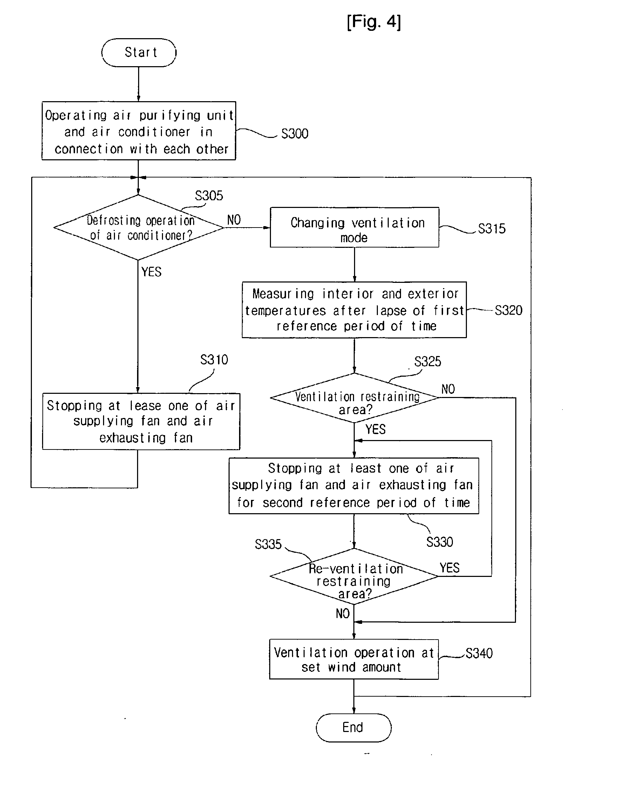

FIG. 4 is a flow chart showing a control method of the air conditioning system according to the present invention.

Referring to FIG. 4, In the air conditioning system according to the present invention, the air purifying unit 200 and the air conditioner 100 are operated in connection with each other.(S300)

While the air conditioner 100 and the air purifying unit 200 is being operated in connection with each other, the first control section 214 of the air purifying unit 200 determines whether the air conditioner 100 is in the defrosting operation state.(S305)

If the air conditioner 100 is determined to be in the defrosting operation state, the first control section 214 applies the drive control signals of the air supplying fan 238 and the air exhausting fan 239 to the total heat exchanger 230 to control the air ventilating and purifying functions.

Namely, in the case in which the first control section 214 applies a control instruction to the second control section 232 so that the total heat exchanger 230 can perform a ventilation restricting operation in the case in which the air conditioner 100 performs the defrosting operation. Further, the second control section 236 controls the fan driving section 237 so as to perform the ventilation restricting operation.

Here, the ventilation restraining operation refers to an operation in which the air supplying fan 238 and the air exhausting fan 239 are selectively stopped to prevent the load of the air conditioner 100 from being increased since the load of the air conditioner 100 increases if the total heat exchange is performed in the total heat exchanger 230 in the case in which the exterior temperature is lower than the interior temperature by a set temperature value.

If the signal according to the ventilation restraining operation is applied to the fan driving section 237 by the second control section 236, one of the air supplying fan 238 and the air exhausting fan 239 is stopped.(S310)

Then, while the total heat exchanger 230 is operated in the ventilation restraining operation mode, the second control section 236 continuously receives the defrosting operation information of the air conditioner 100 from the first control section 214 until the defrosting operation of the air conditioner 100 is completed.

On the other hand, the mode of the air purifying unit 200 is changed from the operation mode to the ventilation mode in the case in which the air conditioner 100 is not in the defrosting operation state.(S315)

Namely, the first control section 214 changes the mode of the air purifying unit 200 to the ventilation mode and controls the air purifying unit 200 so that the wind amount can be regulated to a set wind amount. Namely, the second control section 236 controls the drive of the air supplying fan 238 and the air exhausting fan 239 according to the instruction applied by the first control section 214.

After the air purifying unit 200 is operated at a predetermined wind amount for a first reference period T1 of time, the interior and exterior temperatures are measured.(S320) Namely, the first control section 214 applies a control signal for measuring the interior and exterior temperatures to the measurement section 218.

Then, the measurement section 218 measures the interior temperature and the exterior temperature with at least one temperature sensor and applies the measured values to the first control section 214.

Then, the first control section 214 determines the ventilation restraining area by comparing the difference between the measured interior and exterior temperatures with a set temperature value.(S325)

Here, the ventilation restraining area refers to a case in which the difference value between the interior and exterior temperatures is above a predetermined temperature value.

If the first control section 214 determines the ventilation restraining area, the air purifying unit 200 performs the ventilation restraining operation.(S330)

Namely, the first control section 214 applies a signal to the second control section 236 so that at least one of the air supplying fan 238 and the air exhausting fan 239 is stopped, and accordingly one of the air supplying fan 238 and the air exhausting fan 239 is stopped.

Further, after the ventilation restraining operation has been performed for a second reference period T2 of time, the ventilation capacity restraining area is determined again.(S335)

Namely, after the ventilation restraining operation has been performed for the second reference period T2 of time, the interior and exterior temperatures are measured again by the measurement section 218.

Further, whether the ventilation restraining operation is to be performed again is determined by comparing the interior and exterior temperatures measured by the first control section again with the predetermined temperature again.

In the case in which the ventilation restraining operation is performed again, the step returns to the step S330.

On the other hand, in the case in which the ventilation capacity restraining area is not performed or the ventilation restraining operation is not performed after redetermination in the step S335, the air supplying fan 238 and the air exhausting fan 239 are operated on the basis of the set wind amount of the ventilation mode.(S340)

As mentioned above, as the operation of the air purifying unit is controlled according to the defrosting operation of the air conditioner, the interior temperature is maintained at an optimal state, thereby improving the comfortableness in the interior of a room.

### Industrial Applicability

According to an air conditioning system and a control method of the air conditioning system according to the present invention, since an air conditioner and an air purifying unit used for ventilation and purification of the interior air are controlled so as to be operated in connection with each other so that the ventilating and purifying functions of the air purifying unit is controlled so as to maintain the interior temperature when the air conditioner performs the defrosting operation, the comfortableness in the interior of a room is improved and the reliability and value of the product is improved. Therefore, the industrial applicability of the present invention is high.

## Claims

1. A control method of an air conditioning system, wherein the air conditioning system comprises an air conditioner (100) generating defrosting operation information and an air purifying unit (200) operated in connection with the air conditioner and controlling ventilating and purifying functions on the basis of the defrosting operation information of the air conditioner, wherein the air purifying unit (200) includes an air ventilating and cleaning unit (210)ventilating and purifying interior air, and a total heat exchanger (230) heat-exchanging the interior air with exterior air, and the air purifying unit (200) further includes an air exhausting fan (239) for exhausting the interior air to the outside and an air supplying fan (233) for introducing the exterior air into the interior of a room and the drive of the air supplying fan and the air exhausting fan is controlled according to the defrosting operation of the air conditioner,
the method comprising the steps of:
operating the air conditioner (100) and the air purifying unit (200) in connection with each other;
determining whether the air conditioner (100) performs a defrosting operation; and
controlling the operation of the air cleaning unit (200) according to the determination result,
wherein in the case in which the air conditioner (100) performs a defrosting operation, the drive of an air exhausting fan (239) and an air supplying fan (238) is controlled.

2. A control method according to claim 1, wherein in the case in which the air conditioner (100) performs the defrosting operation, the drive of at least one of the air exhausting fan (239) and the air supplying fan (238) is stopped.

3. A control method according to claim 1, wherein in the case in which the air conditioner (100) does not perform the defrosting operation, the air purifying unit (200) is operated in a set ventilation mode.

4. A control method according to claim 3, wherein after the air purifying unit (200) has been operated in the set ventilation mode for a first reference period of time, a ventilation restraining area is determined.

5. A control method according to claim 4, wherein the ventilation restraining area is a case in which the difference value between the interior and exterior temperatures is above a predetermined temperature value.

6. A control method according to claim 4, wherein in the case in which the air purifying unit (200) is not in the ventilation restraining area, the air supplying fan (238) and the air exhausting fan (249) are driven so as to correspond to a set wind amount.

7. A control method according to claim 4, wherein in the case in which the ventilation restraining area is determined, the drive of at least one of the air exhausting fan (239) and the air supplying fan (238) which constitute the air purifying unit (200) is stopped.

8. A control method according to claim 7, wherein after a second reference period of time elapses in the state in which the drive of at least one of the air exhausting fan (239) and the air supplying fan (238) is stopped, the ventilation restraining area is redetermined.

9. A control method according to claim 8, wherein in the case in which the air purifying unit (200) is in the ventilation restraining area after the redetermination of the ventilation restraining area, the stopped state of the drive of one of the air supplying fan (238) and the air exhausting fan (239) is maintained.

10. A control method according to claim 9, wherein in the case in which the air purifying unit (200) is not in the ventilation restraining area after the redetermination of the ventilation restraining area, the air supplying fan (238) and the air exhausting fan (239) are driven so as to correspond to a set wind amount.

## Patentansprüche

1. Steuerverfahren für ein Klimaanlagensystem, wobei das Klimaanlagensystem eine Klimaanlage (100), die Abtauvorgangsinformationen erzeugt, und eine Luftreinigungseinheit (200) aufweist, die in Zusammenhang mit der Klimaanlage betrieben wird und Belüftungs-und Reinigungsfunktionen auf Basis der Abtauvorgangsinformationen der Klimaanlage steuert, wobei die Luftreinigungseinheit (200) eine Belüftungs- und Luftreinigungseinheit (210) aufweist, die Innenluft belüftet und reinigt, sowie einen gesamten Wärmetauscher (230), der die Innenluft mit Außenluft tauscht, und wobei die Luftreinigungseinheit (200) des Weiteren einen Abluftventilator (239) zum Ausstoßen der innenluft nach außen und einen Zuluftventilator (238) zum Einführen der Außenluft in das Innere eines Raums aufweist, und wobei der Antrieb des Zuluftventilators und des Abluftventilators gemäß dem Abtauvorgang der Klimaanlage gesteuert wird,
wobei das Verfahren die folgenden Schritte aufweist:
Betreiben der Klimaanlage (100) und der Luftreinigungseinheit (200) in Zusammenhang miteinander;
Ermitteln, ob die Klimaanlage (100) einen Abtauvorgang durchführt; und
Steuern des Betriebs der Luftreinigungseinheit (200) gemäß dem Ermittlungsergebnis,
wobei in dem Fall, in dem die Klimaanlage (100) einen Abtauvorgang durchführt, der Antrieb eines Abluftventilators (239) und eines Zuluftventilators (238) gesteuert wird.

2. Steuerverfahren nach Anspruch 1, wobei in dem Fall, in dem die Klimaanlage (100) den Abtauvorgang durchführt, der Antrieb von mindestens dem Abluftventilator (239) oder dem Zuluftventilator (238) angehalten wird.

3. Steuerverfahren nach Anspruch 1, wobei in dem Fall, in dem die Klimaanlage (100) nicht den Abtauvorgang durchführt, die Luftreinigungseinheit (200) in einem festgelegten Belüftungsmodus betrieben wird.

4. Steuerverfahren nach Anspruch 3, wobei, nachdem die Luftreinigungseinheit (200) in dem festgelegten Belüftungsmodus über eine erste Bezugszeitspanne betrieben wurde, ein Belüftungsrückhaltebereich festgelegt wird.

5. Steuerverfahren nach Anspruch 4, wobei der Belüftungsrückhaltebereich ein Fall ist, bei dem der Differenzwert zwischen den Innen- und Außentemperaturen über einem vorgegebenen Temperaturwert liegt.

6. Steuerverfahren nach Anspruch 4, wobei in dem Fall, in dem die Luftreinigungseinheit (200) nicht in dem Belüftungsrückhaltebereich ist, der Zuluftventilator (238) und der Abluftventilator (249) so angetrieben werden, dass sie einer festgelegten Windmenge entsprechen.

7. Steuerverfahren nach Anspruch 4, wobei in dem Fall, in dem der Belüftungsrückhaltebereich festgelegt ist, der Antrieb von mindestens dem Abluftventilator (239) oder dem Zuluftventilator (238), welche die Luftreinigungseinheit (200) bilden, angehalten wird.

8. Steuerverfahren nach Anspruch 7, wobei, nachdem eine zweite Bezugszeitspanne in dem Zustand verstreicht, in dem der Antrieb von mindestens dem Abluftventilator (239) oder dem Zuluftventilator (238) angehalten wird, der Belüftungsrückhaltebereich erneut festgelegt wird.

9. Steuerverfahren nach Anspruch 8, wobei in dem Fall, in dem die Luftreinigungseinheit (200) in dem Belüftungsrückhaltebereich nach der erneuten Festlegung des Belüftungsrückhaltebereichs ist, der angehaltene Zustand des Antriebs des Zuluftventilators (238) oder des Abluftventilators (239) beibehalten wird.

10. Steuerverfahren nach Anspruch 9, wobei in dem Fall, in dem die Luftreinigungseinheit (200) nicht in dem Belüftungsrückhaltebereich nach der erneuten Festlegung des Belüftungsrückhaltebereichs ist, der Zuluftventilator (238) und der Abluftventilator (239) so angetrieben werden, dass sie einer festgelegten Windmenge entsprechen.

## Revendications

1. Procédé de commande d'un système de climatisation, dans lequel le système de climatisation comprend un climatiseur (100) générant des informations d'opération de dégivrage et une unité de purification d'air (200) fonctionnant en liaison avec le climatiseur et commandant des fonctions de ventilation et de purification sur la base des informations d'opération de dégivrage du climatiseur, où l'unité de purification d'air (200) comporte une unité de ventilation et de nettoyage d'air (210) ventilant et purifiant l'air intérieur, et un échangeur de chaleur totale (230) échangeant de la chaleur entre l'air intérieur et l'air extérieur, et l'unité de purification d'air (200) comporte en outre un ventilateur d'évacuation d'air (239) pour évacuer l'air intérieur vers l'extérieur et un ventilateur d'alimentation en air (238) pour introduire l'air extérieur à l'intérieur d'une chambre et l'entraînement du ventilateur d'alimentation en air et du ventilateur d'évacuation d'air est commandé en fonction de l'opération de dégivrage du climatiseur,
le procédé comprenant les étapes qui consistent :
à faire fonctionner le climatiseur (100) en liaison avec l'unité de purification d'air (200) ;
à déterminer si le climatiseur (100) effectue une opération de dégivrage ; et
à commander le fonctionnement de l'unité de nettoyage d'air (200) en fonction du résultat de détermination,
où, dans le cas où le climatiseur (100) effectue une opération de dégivrage, l'entraînement d'un ventilateur d'évacuation d'air (239) et d'un ventilateur d'alimentation en air (238) est commandé.

2. Procédé de commande selon la revendication 1, dans lequel, dans le cas où le climatiseur (100) effectue l'opération de dégivrage, l'entraînement d'au moins l'un du ventilateur d'évacuation d'air (239) et du ventilateur d'alimentation en air (238) est arrêté.

3. Procédé de commande selon la revendication 1, dans lequel, dans le cas où le climatiseur (100) n'effectue pas l'opération de dégivrage, l'unité de purification d'air (200) fonctionne dans un mode de ventilation de consigne.

4. Procédé de commande selon la revendication 3, dans lequel après le fonctionnement de l'unité de purification d'air (200) dans le mode de ventilation de consigne pendant une première durée de référence, une zone de limitation de ventilation est déterminée.

5. Procédé de commande selon la revendication 4, dans lequel la zone de limitation de ventilation est un cas dans lequel la valeur de différence entre les températures intérieure et extérieure est supérieure à une valeur de température prédéterminée.

6. Procédé de commande selon la revendication 4, dans lequel, dans le cas où l'unité de purification d'air (200) ne se trouve pas dans la zone de limitation de ventilation, le ventilateur d'alimentation en air (238) et le ventilateur d'évacuation d'air (249) sont entraînés de manière à correspondre à une quantité de courant d'air de consigne.

7. Procédé de commande selon la revendication 4, dans lequel, dans le cas où la zone de limitation de ventilation est déterminée, l'entraînement d'au moins l'un du ventilateur d'évacuation d'air (239) et du ventilateur d'alimentation en air (238) qui constituent l'unité de purification d'air (200) est arrêté.

8. Procédé de commande selon la revendication 7, dans lequel, après l'écoulement d'une deuxième durée de référence dans l'état où l'entraînement d'au moins l'un du ventilateur d'évacuation d'air (239) et du ventilateur d'alimentation en air (238) est arrêté, la zone de limitation de ventilation est à nouveau déterminée.

9. Procédé de commande selon la revendication 8, dans lequel, dans le cas où l'unité de purification d'air (200) est dans la zone de limitation de ventilation après la nouvelle détermination de la zone de limitation de ventilation, l'état d'arrêt de l'entraînement de l'un du ventilateur d'alimentation en air (238) et du ventilateur d'évacuation d'air (239) est maintenu.

10. Procédé de commande selon la revendication 9, dans lequel, dans le cas où l'unité de purification d'air (200) ne se trouve pas dans la zone de limitation de ventilation après la nouvelle détermination de la zone de limitation de ventilation, le ventilateur d'alimentation en air (238) et le ventilateur d'évacuation d'air (239) sont entraînés de manière à correspondre à une quantité de courant d'air de consigne.
